# EUROPEAN PATENT SPECIFICATION

(11) **EP 2 647 297 B1**
(45) Date of publication and mention of the grant of the patent: **28.12.2016**
(21) Application number: 13159773.4
(22) Date of filing: 18.03.2013
(51) Int. Cl.: A23K 10/00, A23K 10/40, A23L 5/00, A23K 40/10, A23K 40/20, A23K 20/158

(54) **Process for preparing a dry animal feed**
Verfahren zur Herstellung von trockenen Tierfutter
Procédé de préparation d'un aliment sec pour animaux

(30) Priority: 19.03.2012 IT MI20120426
(43) Date of publication of application: 09.10.2013
(73) Proprietor: Sevecom S.p.A., 20121 Milano (IT)
(72) Inventor: Serino, Nazzaro, 20121 Milano (IT)
(74) Representative: Hoffmann Eitle

(56) References cited:
- EP-A1- 1 800 546
- WO-A1-96/11585
- US-A- 3 895 117
- US-A- 4 701 331
- FLANAGAN J ET AL: "Solubilisation of soybean oil in microemulsions using various surfactants", FOOD HYDROCOLLOIDS, ELSEVIER BV, NL, vol. 20, no. 2-3, 1 March 2006 (2006-03-01), pages 253-260, XP028011755, ISSN: 0268-005X, DOI: 10.1016/J.FOODHYD.2005.02.017 [retrieved on 2006-03-01]
- EQBAL: "Fatty Acids Composition of Four Different Vegetable Oils (Red Palm Olein, Palm Olein, Corn Oil and Coconut Oil) by Gas Chromatography", 2011 2ND INTERNATIONAL CONFERENCE ON CHEMISTRY AND CHEMICAL ENGINEERING, vol. 14, 1 January 2011 (2011-01-01), pages 31-34, XP055038599,

## Description

The present invention relates to a process for preparing a dry animal feed, in particular a feed in powder or granular or pellet form, having a predetermined water content. Moreover, the present invention relates to a feed obtained thereby.

It is well known that an animal feed in a solid state has a water content that can vary for different reasons. One reason is given by the fact that the water content which is present in the individual components or ingredients making up the feed (cereals, barley, oats, animal meals, etc.) varies greatly from one season to another and also from one supply batch to another. Another reason is given by the fact that during the process for preparing the feed there are some processing steps that generate heat in an uneven and unpredictable manner (grinding, mixing, extrusion and pelletizing).

US 3 895 117 A (Backlund, 15 July 1975) discloses a method for the preparation of a feed supplement involving the steps of consisting of heating the solid fat to a molten condition, adding an oil-in-water surfactant in the absence of water to form a pre-blend and then admixing the pre-blend with molasses and adding sufficient water to achieve a product having a viscosity no greater than about 3,000 centipoises at 21,1°C (70°F).

The heat that is generated enables the water to evaporate. Yet another reason is given by the fact that also during storage of animal feed in factories and in storage places a reduction in water content occurs due to spontaneous evaporation.

Therefore, there remains a need to be able to have a process for preparing an animal feed having: (i) a given (fixed) water content, preferably a water content comprised from 5 to 20% by weight, relative to the final weight of the feed; (ii) a water content that can be determined (calculated) a priori, i.e. before the animal feed is actually produced and (iii) a water content that is stable over time during preparation of the feed and during storage of the feed itself and such as to prevent, for example, the development of mould or bacteria, processes of degradation of the substances contained in the feed and a quality, for example, of the pellet which does not correspond to what is expected in terms of palatability and mechanical properties. Moreover, it is important that the water present in the animal feed be water which is stably bonded or absorbed or adsorbed or fixed (and not "free" water) in the components or ingredients that make up the animal feed. This aspect is very important because it makes it possible to obtain a feed with a water content that is stable over time, as stated above in point (iii). Furthermore, this serves to avoid phenomena of packing, especially when the feed is in powder or granular or pellet form, and also contributes to avoiding the development of bacteria and/or mould in the feed itself. Therefore, there remains a need to be able to have a process for preparing a feed that does not display the above-described limitations of the prior art processes. One of the objects of the present invention relates to an economical and easy-to-implement process for preparing a dry animal feed, in particular a feed in powder or granular or pellet form, which is able to prepare a feed having: (i) a given (fixed) water content, preferably a water content comprised from 5 to 20% by weight, relative to the final weight of the feed; (ii) a water content that can be determined (calculated) a priori and (iii) a water content that is stable over time during preparation and during storage of the feed itself and such as to avoid, for example, the development of mould or bacteria, processes of degradation of the substances contained in the feed and a quality, for example, of the pellet which does not correspond to what is expected in terms of palatability and mechanical properties.

Another object of the present invention relates to a process for preparing an animal feed, in particular a feed in powder or granular or pellet form, which does not give rise to phenomena of packing and/or the development of bacteria and/or moulds.

The Applicant has surprisingly found that the above objects, and still other objects that will be apparent from the detailed description that follows, are achieved thanks to use of an emulsifying substance comprising or, alternatively, consisting of a soy derivative (a).

The present invention relates to a process for preparing an animal feed having a predetermined water content established a priori, in which use is made of an emulsion comprising or, alternatively, consisting of water, an emulsifying substance comprising or, alternatively, consisting of a soy derivative (a) and a hydrophobic substance, as set forth in the appended independent claim.

The present invention also relates to an animal feed, in particular a feed in powder or granular or pellet form, having a predetermined water content established a priori and containing said emulsion, as set forth in the appended independent claim.

The present invention further relates to the use of an emulsion comprising or, alternatively, consisting of water, an emulsifying substance comprising or, alternatively, consisting of a soy derivative (a) and a hydrophobic substance, to program the final content of water in an animal feed, as claimed in the appended independent claim.

Preferred embodiments of the present invention will be set forth in the detailed description that follows.

The Applicant, after a long, intense activity of research and experimental tests, surprisingly found that a ground dry animal feed, in particular a feed in powder or granular or pellet form, having a predetermined water content that is increased and established a priori (prior to production of the final feed) can be advantageously prepared thanks to the use of a specific emulsion, as described hereunder. In practical terms, an emulsion containing water emulsified in a hydrophobic substance is used. The hydrophobic substance is selected from the group comprising oils, fats, lipids, fatty acids, triglycerides and mixtures thereof, all the above being liquids or solids and of animal or vegetable origin. Preferably, the hydrophobic substance has a melting point of at least 5°C, even more preferably of at least 20°C, measured in accordance with the test ASTM 15-04 No. D5440. Preferably, the melting point of the hydrophobic substance is comprised from 30°C to 80°C, for example from 40°C to 60°C. Preferably, the hydrophobic substance is selected from the group comprising chicken oil, fish oil, whale oil, chicken fat, cured back fat, tallow, lard and fatty acids containing mono-, di- and triglycerides. The emulsion is added in an amount such that the animal feed thus prepared will obtain the predetermined water content established a priori, which is comprised from 5 to 20% by weight, preferably comprised from 10 to 15% by weight, even more preferably comprised from 11 to 13 % by weight; advantageously, it is equal to 12% by weight relative to the final weight of the feed. The emulsion (the aforesaid water emulsified in a hydrophobic substance), in a liquid or viscous state at the working temperature, is prepared separately and is then mixed with the nutritive substances in liquid and/or powder and/or granular form and/or the other solid components making up said feed, to yield the feed itself. The feed thus prepared is cooled to a temperature below the melting point of the hydrophobic substance used.

The present invention relates to a process for preparing a dry animal feed, in particular a feed in powder or granular or pellet form, having a predetermined water content established a priori and comprised from 5 to 20% by weight, preferably comprised from 10 to 15% by weight, more preferably comprised from 11 to 13 % by weight, and even more preferably equal to 12% by weight, relative to the final weight of the feed.

The process comprises a step wherein an emulsion is added to the nutritive substances in liquid and/or in powder and/or in granular and/or the other solid components making up said feed, said emulsion comprising or, alternatively, consisting of water, an emulsifying substance comprising or, alternatively, consisting of a soy derivative (a) selected from the group comprising or, alternatively, consisting of (a0) polyethylene glycol esters of fatty acids obtained from soybean oil - additive E487, Reg. (EC) 1831/2003, (a1) a soybean oil, (a2) an ethoxylated soybean oil or ethoxylated soybean, (a3) at least one fatty acid obtained from soybean oil, (a4) at least one ethoxylated fatty acid obtained from soybean oil, or (a5) a mixture thereof; and a hydrophobic substance, so that said feed reaches the predetermined water content.

In the context of the present invention, said emulsifying substance comprising or, alternatively, consisting of a soy derivative (a), has an average molecular weight which is lower than 12000, preferably lower than 10000, even more preferably lower than 8000. In one embodiment, said average molecular weight of (a) is comprised from 200 to 6000, preferably from 500 to 5000, even more preferably from 1000 to 3000.

In one embodiment, the emulsion comprises or, alternatively, consists of water, an emulsifying substance comprising a soy derivative which comprises or, alternatively, consists of (a0) polyethylene glycol esters of fatty acids obtained from soybean oil - additive E487, Reg. (EC) 1831/2003, and a hydrophobic substance.

Dry feed means a feed in solid form having a water content comprised from 5 to 20% by weight, preferably comprised from 10 to 15% by weight, more preferably comprised from 11 to 13 % by weight and even more preferably equal to 12% by weight relative to the weight of the feed.

The process of the present invention makes it possible to prepare an animal feed in which the water content varies, during preparation, to a lesser degree than in an animal feed prepared in a traditional way without using the emulsion of the present invention. The smaller variation in the water content is due to the fact that water emulsified in a hydrophobic substance using the emulsion of the present invention is added to the nutritive substances in liquid and/or powder and/or granular form and/or to the other solid components making up said feed.

In accordance with the process described above, the feed produced is also rendered hydrophobic, which results in a reduced tendency toward packing and the development of bacteria and/or moulds, as well as a greater stability of the feed over time.

The process can be applied to all types of dry animal feeds or mixtures thereof, such as, for example, mixtures of dry animal feeds that are finely granulated, pelleted, extruded or expanded.

The amount of hydrophobic substance that can be used is comprised from 1 to 10 pbw (parts by weight) per part by weight of water, preferably from 1 to 5 pbw. The emulsion comprises or, alternatively, consists of water, an emulsifying substance and a hydrophobic substance. The emulsifying substance is present in an amount comprised from 0.005 to 0.15 pbw, preferably from 0.05 to 0.10 pbw (parts by weight) per part by weight of hydrophobic substance. In one embodiment, the emulsion is added in an amount by weight comprised from 1 to 20% by weight, preferably from 5 to 15% by weight, relative to the final weight of the feed prepared. The emulsion comprises a hydrophobic substance in a percentage of 1 to 20% by weight, preferably from 5 to 10% by weight, relative to the final weight of the feed; water in a percentage of 1 to 5% by weight, preferably from 2 to 3% by weight, relative to the final weight of the feed; and an emulsifying substance in a percentage of 0.05 to 0.5% by weight, preferably from 0.1 to 0.3% by weight, relative to the final weight of the feed.

The emulsion of the present invention can be added at any time after the grinding and mixing of the nutritive substances in powder and/or granular form and/or of the other solid components making up the feed before pelletting, extrusion or expansion or, alternatively, after pelletting, extrusion or expansion, or through a combination of the points of addition specified above. In the preparation of a traditional dry animal feed, 0.5-5% by weight of water is usually lost, based on the final weight of the dry animal feed. This amount of water that is lost as a result of the heating processes and processing steps originates from the nutritive substances in liquid and/or powder and/or granular form and/or from the other solid components making up said feed. Based on the water content present in said nutritive substances prior to the processing thereof, the amount of water that is lost as a result of the process of preparing the feed (0.5 to 5%, relative to the final weight of the feed) and the water content it is desired to obtain in the finished feed (for example, 11 to 13% by weight, relative to the final weight of the feed), it is possible to calculate the amount of emulsion to be used.

In the process according to the invention, the emulsion is added in an amount comprised from 1 to 20% by weight, preferably from 5 to 15% by weight, based on the final weight of the dry feed for animals. Advantageously, the emulsion added reduces and/or compensates for the amount of water lost in the preparation of the animal feed. The ratio between water and the hydrophobic substance varies according to the solidification point of the hydrophobic substance itself. The higher the solidification point, the more water can be used in relation to the hydrophobic substance. The ratio by weight between water and the hydrophobic substance is preferably comprised from 1:1 to 1:2 and the amount of water in the emulsion is comprised from 1 to 4%, based on the final weight of the dry animal feed. The content of emulsifying substance used, based on the amount of hydrophobic substance, is comprised from 1 to 4% by weight.

Although hydrophobic substances with a melting point above 5 °C can be used, the preferred hydrophobic substances have a minimum melting point of 30°C and are selected, for example, from among fats, such as cured back fat, tallow, chicken fat and slaughterhouse fat; vegetable oils and fish oils; fatty acids and distillation residues of fatty acids containing mono-, di-, triglycerides. Preferably, the melting point of the hydrophobic substance used is lower than 80°C.

The hydrophobic substance can preferably be selected from the group comprising oils, for example an animal oil such as chicken oil or a whale oil; fats, for example a beef fat (tallow) or a pig fat (lard); lipids; triglycerides; saturated fatty acids and/or unsaturated fatty acids, all the above of vegetable or animal origin. The lipids are, for example, slaughterhouse fats or vegetable fats, liquefied by heating if necessary. The fatty acid composition can be determined by gas chromatography, for example with the method NGD C 42-76. Whereas, the triglycerides in the vegetable oils are determined by high-resolution chromatography (HPLC), for example with the method NGD C 45-91:22024 (1992).

The feed of the present invention can contain an amount of hydrophobic substance which depends on the animal species it is intended for. For example, an amount of a hydrophobic substance, such as, for example, animal oil or vegetable oil or animal fat (tallow or lard), comprised from 3-12% by weight is added to prepare a feed intended for poultry. For example, an amount of a hydrophobic substance, such as, for example, animal oil or vegetable oil or animal fat (tallow or lard), comprised from 1-5% by weight is added to prepare a feed intended for pigs. For example, an amount of a hydrophobic substance, such as, for example, animal oil or vegetable oil or animal fat (tallow or lard), comprised from 1-3% by weight is added to prepare a feed intended for cattle. In these three examples, a first part of the hydrophobic substance can be added to the feed via the emulsion, whilst a second part of the hydrophobic substance can be added separately.

An emulsifying substance comprises or, alternatively, consists of a soy derivative (a) selected from the group comprising or, alternatively, consisting of (a0) polyethylene glycol esters of fatty acids obtained from soybean oil -additive E487, (Community Register of Feed Additives - Reg. (EC) N. 1831/2003). The polyethylene glycol esters of fatty acids obtained from the soybean oil, (additive E487 - Reg. (EC) 1831/2003) are surfactant compounds or emulsifiers admitted in the list of additives for use in animal nutrition (common name: PEG esters of fatty acids from soya oil; EC N.°: E487; Chemical No: Polyethylene glycol esters of fatty acids from soya oil ; CAS N.: 61791-07-9). Said esters (a0) are obtained using techniques, apparatus and operating conditions known to the persons skilled in the art. By fatty acids obtained from soybean oil we mean one or more fatty acids obtained using techniques, apparatus and operating conditions known to the persons skilled in the art. For example, a soybean oil (triglyceride) can be subjected to a process of hydrolysis in water to yield glycerine and a mixture of soybean oil fatty acids.

Soybean oil (100 g) generally has the following composition: about 16 g of saturated fats, about 23 g of monounsaturated fats, about 58 g of polyunsaturated fats and about 3% of other compounds. A soybean oil, preferably a refined soybean oil, contains, for example, the following fatty acids:
- linolenic or alpha-linolenic acid (C-18:3) - CAS number 463-40-1, about 5 to 10%;
- linoleic acid (C-18:2) - CAS number 60-33-3, about 50 to 60%;
- oleic acid (C-18:1) - CAS number 112-80-1, about 18 to 25%;
- stearic acid - CAS number 57-11-4, about 3 to 6%;
- palmitic acid - CAS number 57-10-3, about 8 to 12%. The polyethylene glycol esters of fatty acids obtained from soybean oil of the present invention (additive E487
- Reg. (EC) N.°1831/2003) can be, for example, in the form of monoesters or diesters or mixtures thereof. In the context of the present invention and hereinafter we shall make reference in general to "polyethylene glycol esters of fatty acids obtained from soybean oil" to indicate one or more of the above-mentioned embodiments having a variable soybean oil fatty acid composition, without any limitation, but solely for the purpose of simplifying the present description.

In a preferred embodiment, the soybean oil fatty acid is selected from among linolenic or alpha-linolenic acid (C-18:3) - CAS number 463-40-1, linoleic acid (C-18:2) - CAS number 60-33-3, or oleic acid (C-18:1) - CAS number 112-80-1, or stearic acid - CAS number 57-11-4, or palmitic acid - CAS number 57-10-3 or mixtures thereof; in particular the soybean oil fatty acid can be selected from among a mixture of linolenic acid and/or linoleic acid and/or oleic acid in a ratio by weight of 1:1:1 or 1:1:2 or 1:2:1 or 1:2:2.

In one embodiment, the emulsifying substance comprises or, alternatively, consists of a soy derivative selected from the group comprising or, alternatively, consisting of (a1) a soybean oil. Soybean oil is a vegetable oil extracted from soybeans (Glycine max). The soybean oil is obtained using the techniques, apparatus and operating conditions known to the persons skilled in the art.

The composition of the soybean oil can be, for example, the following (per 100 grams): 16 grams of saturated fats, 23 grams of monounsaturated fats, 58 grams of polyunsaturated fats and 3% of other compounds. The unsaturated fatty acids present in soybean oil triglycerides can be, for example, as follows: 5-10% by weight of alpha-linolenic acid (C-18:3); 50-60% by weight of linoleic acid (C-18:2); and 18-25% by weight of oleic acid (C-18:1). Moreover, saturated fatty acids, namely, stearic acid (3-6% by weight) and palmitic acid (8-12% by weight), are also present.

Saturated fat means a fat consisting of triglycerides containing solely saturated fatty acids. Saturated fatty acids have a carbon number comprised, for example, as follows: less than 6 (short-chain saturated fatty acids); from 6 to 12 (medium-chain saturated fatty acids; 13-21 (long-chain saturated fatty acids) and greater than 22 (very long-chain saturated fatty acids). For example, a soybean oil can have the following specifications: an acidity value (amount of free fatty acids) of less than 0.5 mg KOH/g; a peroxide value no greater than 1.0 meq O2/Kg; an iodine value comprised from 120 to 145 mg I2/100 g and a trans fatty acid value of at most 2% by weight.

The emulsifying composition comprises or, alternatively, consists of a soy derivative selected from the group comprising or, alternatively, consisting of (a2) ethoxylated soybean oil and/or ethoxylated soybean, in a ratio by weight comprised from 1:3 to 3:1, for example 1:1. The ethoxylated soybean oil is obtained by means of an ethoxylation process, which involves the use of ethylene oxide, carried out on the soybean oil. The ethoxylation of soybean oil is realized using procedures, chemical reactions and apparatus known to the persons skilled in the art.

For example, an inert gas (nitrogen) is blown into a reactor in order to eliminate the presence of oxygen and subsequently a pre-established amount of soybean oil is introduced into the reactor. A profile of the fatty acids present in the soybean oil can be: C16:0 (palmitic acid) 9-13%; C18:0 (stearic acid) 3-5%; C18:1 (oleic acid) 17-30%; C18:2 (linoleic acid) 48-58; C18:3 (linolenic acid) 5-10%; C20:0 (arachidonic acid) less than 1%. The soybean oil is hydrolyzed to free fatty acids in the presence of an alkaline catalyst and ethylene oxide, for example at a temperature of 120-180°C and a pressure of 0.5-6.0 bars. After the addition of ethylene oxide is completed, the reaction temperature is maintained until a constant pressure value is reached. The reaction is then cooled and the alkaline catalyst is neutralized by adding an acid. The residual ethylene oxide and 1,4-dioxane are removed by using an inert gas or high-temperature steam. Then a vacuum is generated to remove any trace of steam (stripping). When the levels of ethylene oxide and 1,4-dioxane are below 1 mg/Kg and 5 mg/Kg respectively, the reaction is cooled to below 70°C so as to then filter the reaction product. The degree of ethoxylation can vary according to need. For example, 10 or 20 or 40 or 65 moles of ethylene oxide can be reacted with 1 mole of fatty acids contained in the soybean oil (see patent applications GB1050497 A and EP516099 A1 incorporated herein for ready reference).

The ethoxylated soybean is obtained by means of an ethoxylation process carried out directly on the free saturated and/or unsaturated fatty acids. The free fatty acids are obtained by hydrolyzing the triglycerides of soybean oil. Ethoxylation is an industrial process in which ethylene oxide is added to alcohols, phenols and acids (i.e. compounds having reactive hydrogen atoms) in an amount that varies according to the operating conditions of temperature, pressure, solvent and catalyst. The ethoxylated soybean is realized using procedures, chemical reactions and apparatus known to the persons skilled in the art. Ethoxylation is also known by the term PEGylation because poly(ethylene oxide) is also known as poly(ethylene glycol), abbreviated PEG. Therefore, ethoxylated soybean oil and ethoxylated soybean can be obtained by ethoxylating soybean oil or the saturated and/or unsaturated fatty acids obtained from soybean oil with the ethylene oxide, poly(ethylene oxide) or poly(ethylene glycol). For example, an ethoxylated soybean can be prepared in accordance with the above-described process for preparing ethoxylated soybean oil.

The ethoxylated soybean oil or ethoxylated soybean contains from 5 to 200 ethyleneoxy groups; preferably from 10 to 150 ethyleneoxy groups; even more preferably from 15 to 100 ethyleneoxy groups.

The ethoxylated soybean oil or ethoxylated soybean contains from 20 to 80 ethyleneoxy groups; preferably it contains from 25 to 60 ethyleneoxy groups.

The ethoxylated soybean oil or ethoxylated soybean contains 40 ethyleneoxy groups.

Advantageously, the ethoxylated soybean oil or ethoxylated soybean contains from 30 to 45 ethyleneoxy groups.

By ethoxylated soybean containing, for example, 40 ethyleneoxy groups (an ethyleneoxy group derives from ethylene oxide), we mean a product obtained by reacting 1 mole of soybean oil [the fatty acid composition of soybean oil was illustrated above, by way of example] with 40 moles of ethylene oxide using procedures, chemical reactions and apparatus known to the persons skilled in the art. In the context of the present invention and hereinafter we shall make reference in general to "ethoxylated soybean oil" or "ethoxylated soybean" to indicate one or more of the above-mentioned embodiments, having a variable number of ethyleneoxy groups, without any limitation but solely for the purpose of simplifying the present description.

The emulsifying composition comprises or, alternatively, consists of a soy derivative selected from the group comprising or, alternatively, consisting of (a3) at least one fatty acid obtained from soybean oil. The soybean fatty acid can be obtained by means of a process of hydrolysis. The hydrolysis of soybean oil triglycerides produces glycerol (or glycerine) and the respective free fatty acids (saturated, monounsaturated and polyunsaturated) such as alpha-linolenic acid, or linolenic acid, or linoleic acid, or oleic acid, or stearic acid, or palmitic acid or a mixture thereof. The mixture can comprise 0-10% by weight of alpha-linolenic acid (C-18:3), preferably from 0 to 5%; 0-70% by weight of linoleic acid (C-18:2), preferably from 40 to 60%; and 0-55% by weight of oleic acid (C-18:1), preferably from 15 to 40%.

In another preferred embodiment, the fatty acid can be a mixture as described above which further comprises saturated fatty acids such as stearic acid, from 0 to 10% by weight, preferably from 3 to 7% and/or palmitic acid, from 0 to 15% by weight, preferably from 5 to 10%. The emulsifying composition comprises or, alternatively, consists of a soy derivative selected from the group comprising or, alternatively, consisting of (a4) at least one ethoxylated fatty acid, preferably obtained from soybean oil.

The ethoxylated fatty acid obtained from soybean oil is obtained by ethoxylating alpha-linolenic acid, or linolenic acid, or linoleic acid, or oleic acid, or stearic acid, or palmitic acid or a mixture thereof. The mixture subjected to ethoxylation can comprise 0-10% by weight of alpha-linolenic acid (C-18:3), preferably from 0 to 5%; 0-70% by weight of linoleic acid (C-18:2), preferably from 40 to 60%; and 0-55% by weight of oleic acid (C-18:1), preferably from 15 to 40%.

In another preferred embodiment, the mixture subjected to ethoxylation can be a mixture as described above which further comprises saturated fatty acids such as stearic acid, from 0 to 10% by weight, preferably from 3 to 7%, and/or palmitic acid, from 0 to 15% by weight, preferably from 5 to 10%.

The ethoxylation can be carried out on a triglyceride, a saturated fat, a monounsaturated fat and/or a polyunsaturated fat. The degree of ethoxylation varies according to the operating conditions of temperature, pressure, solvent and catalyst. Therefore, the fatty acids obtained from soybean oil, using known chemical processes and apparatus, are ethoxylated to yield ethoxylated fatty acids of soybean oil.

In a preferred embodiment, the ethoxylated soybean oil fatty acid contains from 5 to 200 ethyleneoxy groups; preferably from 10 to 150 ethyleneoxy groups; even more preferably from 15 to 100 ethyleneoxy groups.

In a preferred embodiment, the ethoxylated soybean oil fatty acid contains from 20 to 80 ethyleneoxy groups; preferably from 25 to 60 ethyleneoxy groups; even more preferably from 30 to 50 ethyleneoxy groups. Advantageously, the ethoxylated soybean oil fatty acid contains from 30 to 45 ethyleneoxy groups, for example 40.

By ethoxylated soybean oil fatty acid containing, for example, 15 ethyleneoxy groups (an ethyleneoxy group derives from ethylene oxide), we mean a product obtained by reacting 1 mole of a single fatty acid or mixture of fatty acids [the composition of soybean oil has been illustrated in the present description, by way of example] with 15 moles of ethylene oxide using techniques, apparatus and operating conditions known to the persons skilled in the art. In the context of the present invention and hereinafter we shall make reference in general to "an ethoxylated soybean oil fatty acid" to indicate one or more of the above-mentioned embodiments, having a variable number of ethyleneoxy groups, without any limitation but solely for the purpose of simplifying the present description. The emulsifying substance comprises or, alternatively, consists of a soy derivative selected from the group comprising or, alternatively, consisting of mixtures (a5). The emulsifier comprises or, alternatively, consists of a soy derivative selected from the group comprising or, alternatively, consisting of a mixture (a5)=(a0)+(a1)+(a2), preferably in a ratio by weight 1:1:1.

The emulsifier comprises or, alternatively, consists of a soy derivative selected from the group comprising or, alternatively, consisting of a mixture (a5)=(a0)+(a1) or (a5)=(a1)+(a2), preferably in a ratio by weight of 1:1. Preferably, said emulsifying substance comprising a soy derivative (a) is selected from the group consisting of (a0) polyethylene glycol esters of fatty acids obtained from soybean oil -additive E487, Reg. (EC) 1831/2003, (a2) an ethoxylated soybean oil or ethoxylated soybean, (a4) at least one ethoxylated fatty acid obtained from soybean oil, or (a5) a mixture thereof.

Preferably, said emulsifying substance comprising the soy derivatives (a) selected from among (a0), (a2), (a4) and (a5) comprises from 5 to 200 units of ethylene oxide, preferably from 10 to 100 units of ethylene oxide, even more preferably from 20 to 60 units of ethylene oxide and even more preferably from 30 to 45 units of ethylene oxide, for example 40.

The values of the units of ethylene oxide are to be understood as average values.

In the context of the present invention said soy derivative (a) has a degree of ethoxylation, understood as the content by weight of ethyleneoxy units or units of ethylene oxide, of less than 70% by weight; preferably the degree of ethoxylation is less than 65%; even more preferably it is less than 50%, relative to the average molecular weight of said derivative. In one embodiment, said degree of ethoxylation is comprised from 2 to 45%; preferably from 5 to 35%; even more preferably from 8 to 25%, relative to the average molecular weight of said derivative.

The Applicant has found that using an emulsifying substance comprising or, alternatively, consisting of a soy derivative (a) selected from the group comprising or, alternatively, consisting of (a0), (a1), (a2), (a3), (a4) or (a5), in a process for preparing an animal feed containing nutritive substances in liquid, powder or granular form, makes it possible to prepare an animal feed, in particular a feed in powder or granular or pellet form, having: (i) a given (fixed) water content, preferably a water content comprised from 5 to 20% by weight, relative to the final weight of the feed; (ii) a water content that can be determined (calculated) a priori before the preparation thereof and (iii) a water content that remains stable over time during preparation (after the treatment with steam, after the pelletizing treatment, after the crushing treatment) and during storage of the feed itself and is such as to avoid for example the development of moulds or bacteria, processes of degradation of the substances contained in the feed and a quality, for example, of the pellet which does not correspond to what is expected in terms of palatability and mechanical properties. Furthermore, the feed does not become packed, nor does it give rise to the development of bacteria and/or moulds.

The emulsifying substance of the present invention has valid application as a technological and/or nutritional additive for the preparation of an animal feed. In the context of the present invention, animal feed means, by way of non-restrictive example, a feed for pigs, aquaculture, fish, poultry species, e.g. chickens and turkeys, ruminants, e.g. cattle and calves, sheep, goats and rabbits at any stage of growth.

The present invention also relates to an animal feed, preferably a dry feed in the form of flakes or granules or pellets; a dry feed, in the context of the present invention, is in any case a feed which, at the end of its preparation, contains a water content comprised from 5 to 20%, preferably from 10 to 15%, even more preferably from 11 to 13 %, and even more preferably about 12% (at a temperature of 25°C and pressure of 1 atmosphere).

Preferably, the feed of the present invention comprises said emulsion in an amount comprised from 1 to 20% by weight, preferably from 5 to 15% by weight relative to the final weight of the feed.

In one embodiment the feed of the present invention comprises the emulsifying substance comprising a soy derivative (a) selected from the group comprising or alternatively consisting of (a0) polyethylene glycol esters of fatty acids obtained from soybean oil - additive E487, Reg. (EC) 1831/2003, (a2) an ethoxylated soybean oil or ethoxylated soybean, (a4) at least one ethoxylated fatty acid obtained from soybean oil or (a5) a mixture thereof.

Preferably, the feed of the present invention comprises said soy derivatives (a) wherein (a0), (a2), (a4) and (a5) comprise from 5 to 200 units of ethylene oxide, preferably from 10 to 100 units of ethylene oxide, even more preferably from 20 to 60 units of ethylene oxide and even more preferably from 30 to 45 units of ethylene oxide, for example 40.

Preferably, the feed of the present invention comprises a hydrophobic substance selected from the group comprising hydrophobic substances with a melting point comprised from 30°C to 80 °C.

Preferably, said hydrophobic substance is selected from the group comprising oils, fats, lipids, triglycerides, saturated fatty acids and/or unsaturated fatty acids, all the above of vegetable or animal origin, preferably chicken oil, fish oil, whale oil, chicken fat, cured back fat, tallow, lard and fatty acids containing mono-, di-, and triglycerides.

A dry animal feed comprises nutritive substances which are in a liquid and/or solid state and/or in a suspension. Said nutritive substances are present in a feed in the form of a premixture of micro components and a mixture of macro components.

The animal feed of the present invention comprises said nutritive substances (a premixture of micro components and a mixture of macro components), possibly other water, in addition to that present in the emulsion, possibly a part of hydrophobic substance, in addition to that present in the emulsion, and the emulsion of the present invention.

The micro components can comprise vitamins, for example vitamins in a solid or liquid state, dietary minerals, mineral salts, trace elements, flavouring substances, enzymes, organic or inorganic acids, essential oils and probiotic microorganisms.

The macro components can comprise dry components consisting of cereals. The cereals are, for example, selected from among wheat flour, oats, bran, barley, maize, rice and rye. The cereals can be, for example, crushed or ground or used as such. The macro components can further comprise protein of vegetable origin, derived, for example, from peanuts, rapeseed, soybean, sunflower, palm, olive, cotton and linseed. The macro components can further comprise animal protein, blood meal, fish meal, molasses and products derived from milk, such as, for example, milk powder or whey powder. For example, the preparation of the dry animal feed of the present invention starts with the grinding of many of the raw products, such as cereals. This causes a loss/reduction in the water content. Then, the dry ingredients are mixed together. The hydrophobic substance, for example some lipids, conveniently in the liquid phase, and fatty acids can be further added and mixed with the dry animal feed. Then there are several different treatment methods depending on the type of procedure used. For example, the mixed dry animal feed can be directly packaged. Another possibility is thermal treatment of the dry animal feed in a pelletizing device, for example, at 55-90°C, or in an expander at 90-120°C, or in an extruder at 130-160 °C, or a combination of these thermal treatments prior to packaging. Water evaporates in high-temperature treatments. The higher the treatment temperature and the longer the treatment time, the more water will evaporate.

In accordance with the invention, the emulsion comprising or, alternatively, consisting of water emulsified in a hydrophobic substance using the emulsifying substance of the present invention can be added in the preparation process in one or more operations so as to increase the water content of the dry animal feed to the desired level estimated a priori. The addition can be made: (a) to one of the ground components or to the dry animal feed before a possible treatment at an increased temperature, (b) after one or more treatments of the animal feed at an increased temperature, or else (c) through a combination of the points of addition in accordance with (a) and (b). After the addition, the emulsion is mixed into the animal feed. If the hydrophobic substance has a low melting point, the animal feed mixture is cooled to a temperature below the melting point of the hydrophobic substance. In order to obtain a powder of a granular type having good quality and stability, it is advisable to pelletize the animal feed in a final treatment at an increased temperature. The pelletizing operation can be followed if necessary by crushing of the pellet into the desired particle size. The present invention is further illustrated by the following examples.

Preferably, in said process said emulsion is added to:
(i) the nutritive substances in powder and/or granular form present in the animal feed, prior to the thermal treatment, if any, of the feed itself;
(ii) one or more of the ground solid components present in the feed, prior to the thermal treatment, if any, of the feed itself;
(iii) the animal feed after one or more treatments of the feed at an increased temperature, or
(iv) a combination of the above points of addition. Preferably, said treatments are thermal treatments, preferably extrusion or pelletizing, or treatments which develop heat, preferably grinding of the solid components present in the feed.

### Examples

A formulation in the solid state (1) for preparing a dry animal feed -F1 was prepared by mixing the following ingredients.

**Table 1**

| Formulation (1) (F1) | Amount in pbw |
|---|---|
| Potato flour | 10 |
| Rye | 20 |
| Meat meal | 10 |
| Oil seed extract | 7 |
| Palm oil | 8 |
| Wheat | 20 |
| Molasses | 6 |
| Premixture | 8 |

Formulation (1) -F1, having a water content of around 12.0% by weight, had 3.5 parts by weight of an emulsion added to it, the emulsion consisting of 2 parts by weight of cured back fat having a melting point of 30°C, 1 part by weight of water and 0.5 parts by weight of a soy derivative (a) indicated with (a0) polyethylene glycol esters of fatty acids obtained from soybean oil - additive E487. Following this addition, it was estimated that the animal feed, after a steam treatment and pelletizing, would obtain a water content of around 12 % by weight. By way of comparison, a control formulation (2) - F2 was prepared which contained, in addition to formulation (1), 1.5 parts by weight of ground rye and 2 parts by weight of cured back fat having a melting point of 30°. The two animal feed mixtures were treated with steam and then directly introduced into a pelletizing device under pressure at 70°C. The pelletized product obtained was cooled and crushed into a coarse powder. The animal feed mixtures obtained and the various intermediate products were analyzed for water content according to the method of Karl Fischer. The following results were obtained.

| Feed | H₂O % (pbw) F1 | H₂O % (pbw) F2 |
|---|---|---|
| Before treatment with steam | 12.2 | 11.6 |
| After treatment with steam | 13.4 | 12.7 |
| After pelletizing | 12.3 | 11.7 |
| After crushing | 12.0 | 11.4 |

Moreover, a formulation in the solid state (3) -F3 was prepared which was distinguished from F1 only by the soy derivative (a). F3 contained a soy derivative (a) indicated with ethoxylated soybean oil (a1), obtained by adding 20 moles of ethylene oxide to 1 mole of soybean oil. Formulation F3 gave results similar to those of formulation F1.

Practically speaking, the water content in the animal feed according to the invention (F1 and F3) reached the desired level estimated a priori, of around 12% by weight, while the water content of the control formulation F2 was decidedly lower.

## Claims

1. A process for preparing a dry animal feed, in particular a feed in powder or granular or pellet form, having a predetermined water content established a priori, said process comprising a step wherein the nutritive substances in liquid and/or powder and/or granular form and/or the other solid components making up said feed have added to them an emulsion comprising:
- water,
- an emulsifying substance comprising a soy derivative (a) selected from the group consisting of (a0) polyethylene glycol esters of fatty acids obtained from soybean oil -additive E487, Reg. (EC) 1831/2003, (a1) a soybean oil, (a2) an ethoxylated soybean oil or ethoxylated soybean, (a3) at least one fatty acid obtained from soybean oil, (a4) at least one ethoxylated fatty acid obtained from soybean oil, or (a5) a mixture thereof; e
- a hydrophobic substance,
so that said feed reaches the predetermined water content.

2. The process according to claim 1, wherein said predetermined water content established a priori is comprised from 5 to 20% by weight; preferably from 10 to 15% by weight; preferably from 11 to 13% by weight, and even more preferably it is 12% by weight relative to the weight of the feed.

3. The process according to claim 1 or 2, wherein said emulsion is added in an amount comprised from 1 to 20% by weight; preferably from 5 to 15% by weight, relative to the final weight of the animal feed.

4. The process according to any one of claims 1-3, wherein said emulsifying substance comprising a soy derivative (a) is selected from the group consisting of (a0) polyethylene glycol esters of fatty acids obtained from soybean oil -additive E487, Reg. (EC) 1831/2003, (a2) an ethoxylated soybean oil or ethoxylated soybean, (a4) at least one ethoxylated fatty acid obtained from soybean oil, or (a5) a mixture thereof.

5. The process according to claim 1 or 4, wherein said soy derivatives (a) selected from among (a0), (a2), (a4) and (a5) comprise from 5 to 200 units of ethylene oxide; preferably from 10 to 100 units of ethylene oxide; even more preferably from 20 to 60 units of ethylene oxide.

6. The process according to any one of claims 1-5, wherein said hydrophobic substance is selected from the group comprising hydrophobic substances with a melting point above 5 °C, preferably a melting point comprised from 30°C to 80°C.

7. The process according to claim 6, wherein said hydrophobic substance is selected from the group comprising oils, fats, lipids, triglycerides, saturated fatty acids and/or unsaturated fatty acids, all the above of vegetable or animal origin; preferably chicken oil, fish oil, whale oil, chicken fat, cured back fat, tallow, lard and fatty acids containing mono-, di-, and triglycerides.

8. The process according to any one of claims 1-7, wherein said emulsion is added to:
(i) the nutritive substances in powder and/or granular form present in the animal feed, prior to the thermal treatment, if any, of the feed itself;
(ii) one or more of the ground solid components present in the feed, prior to the thermal treatment, if any, of the feed itself;
(iii) the animal feed after one or more treatments of the feed at an increased temperature, or
(iv) a combination of the above points of addition.

9. The process according to claim 8, wherein said treatments are thermal treatments, preferably extrusion or pelletizing, or treatments which develop heat, preferably grinding of the solid components present in the feed.

10. A dry animal feed having a predetermined water content established a priori, comprised from 5 to 20% by weight of water relative to the total weight of the feed, said feed being comprised of the nutritive substances in liquid and/or powder and/or granular form and/or of other solid components which form said feed, **characterized in that** it further comprises an emulsion comprising or, alternatively, consisting of:
- water,
- an emulsifying substance comprising a soy derivative (a) selected from the group consisting of (a0) polyethylene glycol esters of fatty acids obtained from soybean oil -additive E487, Reg. (EC) 1831/2003, (a1) a soybean oil, (a2) an ethoxylated soybean oil or ethoxylated soybean, (a3) at least one fatty acid obtained from soybean oil, (a4) at least one ethoxylated fatty acid obtained from soybean oil, or (a5) a mixture thereof; and
- a hydrophobic substance.

11. The feed according to claim 10, wherein said predetermined water content established a priori is comprised from 10 to 15% by weight; preferably from 11 to 13% by weight, and even more preferably it is 12% by weight relative to the final weight of the feed.

12. The feed according to claim 10, wherein said emulsion is present in an amount comprised from 1 to 20% by weight; preferably from 5 to 15% by weight, relative to the final weight of the animal feed.

13. The feed according to any one of claims 10-12, wherein said emulsifying substance comprising a soy derivative (a) is selected from the group consisting of (a0) polyethylene glycol esters of fatty acids obtained from soybean oil -additive E487, Reg. (EC) 1831/2003, (a2) an ethoxylated soybean oil or ethoxylated soybean, (a4) at least one ethoxylated fatty acid obtained from soybean oil, or (a5) a mixture thereof.

14. The feed according to any one of the preceding claims 10-13, wherein said soy derivatives (a) selected from among (a0), (a2), (a4) and (a5) comprise from 5 to 200 units of ethylene oxide; preferably from 10 to 100 units of ethylene oxide; even more preferably from 20 to 60 units of ethylene oxide.

15. The feed according to any one of claims 10-14, wherein said hydrophobic substance is selected from the group comprising hydrophobic substances with a melting point above 5 °C, preferably a melting point comprised from 30°C to 80°C; preferably said hydrophobic substance is selected from the group comprising oils, fats, lipids, triglycerides, saturated fatty acids and/or unsaturated fatty acids, all the above of vegetable or animal origin; preferably chicken oil, fish oil, whale oil, chicken fat, cured back fat, tallow, lard and fatty acids containing mono-, di-, and triglycerides.

## Patentansprüche

1. Verfahren zur Herstellung eines Trockenfutters, insbesondere eines Futters in Pulver- oder Körnchen- oder Pelletform, mit einem vorbestimmten Wassergehalt, der im Vorhinein festgelegt wurde, wobei das Verfahren einen Schritt umfasst, in dem den Nährstoffen in flüssiger und/oder Pulver- und/oder Körnchenform und/oder den anderen festen Komponenten, die das Futter bilden, eine Emulsion zugegeben wird, umfassend:
- Wasser,
- eine emulgierende Substanz, die ein Sojaderivat (a), ausgewählt aus der Gruppe bestehend aus (a0) Polyethylenglykolestern von aus Sojabohnenöl-Zusatzstoff E487, Reg. (EC) 1831/2003 erhaltenen Fettsäuren, (a1) einem Sojabohnenöl, (a2) einem ethoxylierten Sojabohnenöl oder ethoxylierten Sojabohnen, (a3) zumindest einer aus Sojabohnenöl erhaltenen Fettsäure, (a4) zumindest einer aus Sojabohnenöl erhaltenen ethoxylierten Fettsäure oder (a5) einer Mischung davon, umfasst;
- eine hydrophobe Substanz,
so dass das Futter den vorbestimmten Wassergehalt erreicht.

2. Verfahren gemäss Anspruch 1, wobei der vorbestimmte Wassergehalt, der im Vorhinein festgelegt wurde, 5 bis 20 Gew.%, vorzugsweise 10 bis 15 Gew.%, umfasst; vorzugsweise beträgt er 11 bis 13 Gew.% und noch stärker bevorzugt 12 Gew.%, bezogen auf das Gewicht des Futters.

3. Verfahren gemäss Anspruch 1 oder 2, wobei die Emulsion in einer Menge zugegeben wird, die 1 bis 20 Gew.%, vorzugsweise 5 bis 15 Gew.%, bezogen auf das Endgewicht des Tierfutters, umfasst.

4. Verfahren gemäss irgendeinem der Ansprüche 1 bis 3, wobei die emulgierende Substanz, die ein Sojaderivat (a) umfasst, aus der Gruppe bestehend aus (a0) Polyethylenglykolestern von aus Sojabohnenöl-Zusatzstoff E487, Reg. (EC) 1831/2003 erhaltenen Fettsäuren, (a2) einem ethoxylierten Sojabohnenöl oder ethoxylierten Sojabohnen, (a4) zumindest einer aus Sojabohnenöl erhaltenen ethoxylierten Fettsäure oder (a5) einer Mischung davon ausgewählt ist.

5. Verfahren gemäss Anspruch 1 oder 4, wobei das Sojaderivat (a), ausgewählt aus (a0), (a2), (a4) und (a5), 5 bis 200 Ethylenoxideinheiten, vorzugsweise 10 bis 100 Ethylenoxideinheiten, noch stärker bevorzugt 20 bis 60 Ethylenoxideinheiten, umfasst.

6. Verfahren gemäss irgendeinem der Ansprüche 1 bis 5, wobei die hydrophobe Substanz aus der Gruppe, umfassend hydrophobe Substanzen mit einem Schmelzpunkt oberhalb von 5°C, vorzugsweise einem Schmelzpunkt, der 30 bis 80°C umfasst, ausgewählt ist.

7. Verfahren gemäss Anspruch 6, wobei die hydrophobe Substanz aus der Gruppe, umfassend Öle, Fette, Lipide, Triglyceride, gesättigte Fettsäuren und/oder ungesättigte Fettsäuren, die alle pflanzlichen oder tierischen Ursprungs sind, vorzugsweise Hühneröl, Fischöl, Walöl, Hühnerfett, gehärtetes Rückenfett, Talg, Schmalz und Fettsäuren, die Mono-, Di- und Triglyceride enthalten, ausgewählt ist.

8. Verfahren gemäss irgendeinem der Ansprüche 1 bis 7, wobei die Emulsion zu:
(i) den Nährstoffen in Pulver- und/oder Körnchenform, die in dem Tierfutter vorhanden sind, vor der thermischen Behandlung, sofern vorhanden, dem Futter selbst;
(ii) einer oder mehreren der gemahlenen festen Komponenten, die in dem Futter vorhanden sind, vor der thermischen Behandlung, sofern vorhanden, dem Futter selbst;
(iii)dem Tierfutter nach einer oder mehreren Behandlungen des Futters bei einer erhöhten Temperatur, oder
(iv) einer Kombination der oben genannten Zugabestellen zugegeben wird.

9. Verfahren gemäss Anspruch 8, wobei die Behandlungen thermische Behandlungen, vorzugsweise Extrusion oder Pelletisieren, oder Behandlungen, die Wärme entwickeln, vorzugsweise Mahlen der in dem Futter vorhandenen festen Komponenten, sind.

10. Trockenfutter mit einem im Vorhinein festgelegten vorbestimmten Wassergehalt, das 5 bis 20 Gew.% Wasser, bezogen auf das Gesamtgewicht des Futters, umfasst, wobei das Futter Nährstoffe in flüssiger und/oder Pulver- und/oder Körnchenform und/oder andere feste Komponenten, die das Futter bilden, umfasst, **dadurch gekennzeichnet, dass** es ferner eine Emulsion umfasst, umfassend oder alternativ bestehend aus:
- Wasser,
- eine(r) emulgierende(n) Substanz, die ein Sojaderivat (a), ausgewählt aus der Gruppe bestehend aus (a0) Polyethylenglykolestern von aus Sojabohnenöl-Zusatzstoff E487, Reg. (EC) 1831/2003 erhaltenen Fettsäuren, (a1) einem Sojabohnenöl, (a2) einem ethoxylierten Sojabohnenöl oder ethoxylierten Sojabohnen, (a3) zumindest einer aus Sojabohnenöl erhaltenen Fettsäure, (a4) zumindest einer aus Sojabohnenöl erhaltenen ethoxylierten Fettsäure oder (a5) einer Mischung davon, umfasst; und
- eine(r) hydrophobe(n) Substanz.

11. Futter gemäss Anspruch 10, wobei der im Vorhinein festgelegte vorbestimmte Wassergehalt 10 bis 15 Gew.%, vorzugsweise 11 bis 13 Gew.%, umfasst und noch stärker bevorzugt beträgt er 12 Gew.%, bezogen auf das Endgewicht des Futters.

12. Futter gemäss Anspruch 10, wobei die Emulsion in einer Menge, umfassend 1 bis 20 Gew.%, vorzugsweise 5 bis 15 Gew.%, bezogen auf das Endgewicht des Tierfutters, vorhanden ist.

13. Futter gemäss irgendeinem der Ansprüche 10 bis 12, wobei die emulgierende Substanz, die ein Sojaderivat (a) umfasst, aus der Gruppe bestehend aus (a0) Polyethylenglykolestern von aus Sojabohnenöl-Zusatzstoff E487, Reg. (EC) 1831/2003 erhaltenen Fettsäuren, (a2) einem ethoxylierten Sojabohnenöl oder ethoxylierten Sojabohnen, (a4) zumindest einer aus Sojabohnenöl erhaltenen ethoxylierten Fettsäure oder (a5) einer Mischung davon ausgewählt ist.

14. Futter gemäss irgendeinem der vorhergehenden Ansprüche 10 bis 13, wobei das Sojaderivat (a), ausgewählt aus (a0), (a2), (a4) und (a5), 5 bis 200 Ethylenoxideinheiten, vorzugsweise 10 bis 100 Ethylenoxideinheiten, noch stärker bevorzugt 20 bis 60 Ethylenoxideinheiten, umfasst.

15. Futter gemäss irgendeinem der Ansprüche 10 bis 14, wobei die hydrophobe Substanz aus der Gruppe, umfassend hydrophobe Substanzen mit einem Schmelzpunkt oberhalb von 5°C, vorzugsweise einem Schmelzpunkt, der 30 bis 80°C umfasst, ausgewählt ist; vorzugsweise ist die hydrophobe Substanz aus der Gruppe, umfassend Öle, Fette, Lipide, Triglyceride, gesättigte Fettsäuren und/oder ungesättigte Fettsäuren, die alle pflanzlichen oder tierischen Ursprungs sind, vorzugsweise Hühneröl, Fischöl, Walöl, Hühnerfett, gehärtetes Rückenfett, Talg, Schmalz und Fettsäuren, die Mono-, Di- und Triglyceride enthalten, ausgewählt.

## Revendications

1. Procédé de préparation d'un aliment sec pour animaux, en particulier d'un aliment sous forme de poudre ou granulaire ou de pastilles, ayant une teneur en eau prédéterminée établie a priori, ledit procédé comprenant une étape dans laquelle les substances nutritives sous forme de liquide et/ou de poudre et/ou sous forme granulaire et/ou les autres composants solides constituant ledit aliment ont, ajoutée à ceux-ci, une émulsion comprenant :
- de l'eau,
- une substance émulsifiante comprenant un dérivé de soja (a) choisi dans le groupe consistant en (a0) esters de polyéthylène glycol d'acides gras obtenus à partir de l'additif E487 d'huile de soja, Reg. (CE) 1831/2003, (a1) une huile de soja, (a2) une huile de soja éthoxylée ou du soja éthoxylé, (a3) au moins un acide gras obtenu à partir d'huile de soja, (a4) au moins un acide gras éthoxylé obtenu à partir d'huile de soja, ou (a5) un mélange de ceux-ci ; et
- une substance hydrophobe,
de sorte que ledit aliment atteigne une teneur en eau prédéterminée.

2. Procédé selon la revendication 1, dans lequel ladite teneur en eau prédéterminée établie a priori est de 5 à 20 % en poids; de préférence de 10 à 15 % en poids; de préférence de 11 à 13 % en poids, et de manière encore davantage préférée, elle est de 12 % en poids par rapport au poids de l'aliment.

3. Procédé selon la revendication 1 ou 2, dans lequel ladite émulsion est ajoutée en une quantité comprise de 1 à 20 % en poids ; de préférence de 5 à 15 % en poids, par rapport au poids final de l'alimentation pour animaux.

4. Procédé selon l'une quelconque des revendications 1 à 3, dans lequel ladite substance émulsifiante comprenant un dérivé de soja (a) est choisie dans le groupe consistant en (a0) esters de polyéthylène glycol d'acides gras obtenus à partir de l'additif E487 d'huile de soja, Reg. (CE) 1831/2003, (a2) une huile de soja éthoxylée ou du soja éthoxylé, (a4) au moins un acide gras éthoxylé obtenu à partir d'huile de soja, ou (a5) un mélange de ceux-ci.

5. Procédé selon la revendication 1 ou 4, dans lequel lesdits dérivés de soja (a) choisis parmi (a0), (a2), (a4) et (a5) comprennent de 5 à 200 unités d'oxyde d'éthylène ; de préférence de 10 à 100 unités d'oxyde d'éthylène ; de manière encore davantage préférée de 20 à 60 unités d'oxyde d'éthylène.

6. Procédé selon l'une quelconque des revendications 1 à 5, dans lequel ladite substance hydrophobe est choisie dans le groupe comprenant des substances hydrophobes présentant un point de fusion supérieur à 5 °C, de préférence un point de fusion compris de 30 °C à 80 °C.

7. Procédé selon la revendication 6, dans lequel ladite substance hydrophobe est choisie dans le groupe comprenant des huiles, des graisses, des lipides, des triglycérides, des acides gras saturés et/ou des acides gras insaturés, tous les éléments ci-dessus étant d'origine végétale ou animale; de préférence de l'huile de poulet, de l'huile de poisson, de l'huile de baleine, de la graisse de poulet, de la graisse dorsale affinée, du suif, du lard et des acides gras contenant des monoglycérides, diglycérides et triglycérides.

8. Procédé selon l'une quelconque des revendications 1 à 7, dans lequel ladite émulsion est ajoutée :
(i) aux substances nutritives sous forme de poudre et/ou granulaire présentes dans l'aliment pour animaux, avant le traitement thermique, le cas échéant, de l'aliment lui-même;
(ii) à un ou plusieurs des composants solides moulus présents dans l'aliment, avant le traitement thermique, le cas échéant, de l'aliment lui-même ;
(iii) à l'aliment pour animaux après un ou plusieurs traitements de l'aliment à une température accrue, ou
(iv) à une combinaison des points d'addition ci-dessus.

9. Procédé selon la revendication 8, dans lequel lesdits traitements sont des traitements thermiques, de préférence une extrusion ou un pastillage, ou des traitements qui développement de la chaleur, de préférence le broyage des composants solides présents dans l'aliment.

10. Aliment sec pour animaux ayant une teneur en eau prédéterminée établie a priori, constitué de 5 à 20 % en poids d'eau par rapport au poids total de l'aliment, ledit aliment étant constitué des substances nutritives sous forme liquide et/ou de poudre et/ou granulaire et/ou d'autres composants solides qui forment ledit aliment, **caractérisé en ce qu'**il comprend en outre une émulsion comprenant ou, en variante, consistant en ;
- de l'eau
- une substance émulsifiante comprenant un dérivé de soja (a) choisi dans le groupe consistant en (a0) des esters de polyéthylène glycol d'acides gras obtenus à partir de l'additif E487 d'huile de soja, Reg. (CE) 1831/2003, (a1) une huile de soja, (a2) une huile de soja éthoxylée ou du soja éthoxylé, (a3) au moins un acide gras obtenu à partir d'huile de soja, (a4) au moins un acide gras éthoxylé obtenu à partir d'huile de soja, ou (a5) un mélange de ceux-ci ; et
- une substance hydrophobe.

11. Aliment selon la revendication 10, dans lequel ladite teneur en eau prédéterminée établie a priori est de 10 à 15 % en poids ; de préférence de 11 à 13% en poids, et de manière encore davantage préférée, elle est de 12 % en poids par rapport au poids final de l'aliment.

12. Aliment selon la revendication 10, dans lequel ladite émulsion est présente en une quantité de 1 à 20 % en poids; de préférence de 5 à 15 % en poids, par rapport au poids final de l'aliment pour animaux.

13. Aliment selon l'une quelconque des revendications 10 à 12, dans lequel ladite substance émulsifiante comprenant un dérivé de soja (a) est choisie dans le groupe consistant en (a0) des esters de polyéthylène glycol d'acides gras obtenus à partir de l'additif E487 d'huile de soja, Reg. (CE) 1831/2003, (a2) une huile de soja éthoxylée ou du soja éthoxylé, (a4) au moins un acide gras éthoxylé obtenu à partir d'huile de soja, ou (a5) un mélange de ceux-ci.

14. Aliment selon l'une quelconque des revendications 10 à 13 précédentes, dans lequel lesdits dérivés de soja (a) choisis parmi (a0), (a2), (a4) et (a5) comprennent de 5 à 200 unités d'oxyde d'éthylène; de préférence de 10 à 100 unités d'oxyde d'éthylène ; de manière encore davantage préférée de 20 à 60 unités d'oxyde d'éthylène.

15. Aliment selon l'une quelconque des revendications 10 à 14, dans lequel ladite substance hydrophobe est choisie dans le groupe comprenant des substances hydrophobes présentant un point de fusion supérieur à 5 °C, de préférence, un point de fusion de 30 °C à 80 °C; de préférence ladite substance hydrophobe est choisie dans le groupe comprenant des huiles, des graisses, des lipides, des triglycérides, des acides gras saturés et/ou des acides gras insaturés, tous les éléments ci-dessus étant d'origine végétale ou animale; de préférence, de l'huile de poulet, de l'huile de poisson, de l'huile de baleine, de la graisse de poulet, de la graisse dorsale affinée, du suif, du lard et des acides gras contenant des monoglycérides, diglycérides et triglycérides
